# EUROPEAN PATENT SPECIFICATION

(11) **EP 0 592 424 B1**
(45) Date of publication and mention of the grant of the patent: **14.08.1996**
(21) Application number: 91915218.1
(22) Date of filing: 12.06.1991
(51) Int. Cl.: F03G 7/06, F15B 21/06

(54) **HIGH FORCE THERMOCHEMICAL ACTUATOR**
VORRICHTUNG MIT THERMOCHEMISCHEN BETRIEB
ACTIONNEUR THERMOCHIMIQUE DE GRANDE PUISSANCE

(30) Priority: 08.04.1991 US 682423
(43) Date of publication of application: 20.04.1994
(73) Proprietor: SCHNEIDER, Edward T., Mentor, OH 44060 (US)
(72) Inventor: SCHNEIDER, Edward T., Mentor, OH 44060 (US)
(74) Representative: Gasquet, Denis
(86) International application number: PCT/US91/04178
(87) International publication number: WO 92/17703

(56) References cited:
- FR-A- 2 408 049
- GB-A- 2 095 338
- GB-A- 2 114 741
- US-A- 3 475 904
- US-A- 4 235 075
- US-A- 4 253 304

## Description

### Technical Field

The present invention relates to mechanical power supplies. It finds particular application in conjunction with creating a high pressure fluid for extensible piston actuators and will be described with particular reference thereto. However, it is to be appreciated that the invention will also find application in conjunction with other high pressure fluid systems, as well as, other mechanical power supplies, such as solenoid type actuators, pumps, motors, valve controllers, and the like.

### Background Art

Heretofore, various sources of mechanical power have been provided. Solenoids are a common extensible actuator. Although solenoids are relatively simple to control and relatively inexpensive, they have several drawbacks. First, solenoids produce relatively little force for their physical size. Second, solenoids generate relatively small starting forces, i.e. they do not generate full force from a dead start. Even once extended, solenoids require full power to remain in their actuated state. Further, under low voltages or marginally higher loads, solenoids stall or fail to pull. Third, the inductive coil can generate RF interference that interferes with electronic control circuitry. Also, solenoids tend to be noisy. They "clack" when pressed open and tend to chatter or buzz under heavy loads.

Electric gear motors are less easy to control than solenoids but produce more force for their physical size. However, gear motors, particularly AC operated gear motors, tend to induce RF interference which interferes with control circuitry. Like a solenoid, gear motors do not start at full force. Gear motors can stall under high start up load conditions. Gear motors tend to be relatively slow. Like solenoids, when first actuated, gear motors draw a large initial surge current. Gear motors tend to be noisy, making a growling sound as they operate.

For higher power densities, hydraulic actuators are commonly utilized. However, the control lines, pumps, fluid reservoirs, pressure regulators, and other associated support devices render hydraulic and pneumatic cylinder assemblies complex to use and space inefficient. Moreover, hydraulic systems tend to be dangerous in a failure mode. When the high pressure fluids are unexpectedly released, the pressure is sufficiently great that they can penetrate or break surrounding structures, injure human attendants either directly and though high pressure oil induced blood poisoning, or the like. Moreover, hydraulic systems tend to be associated with an undesirable whine.

Others have used expandable wax actuators for opening valves or performing other mechanical work. US-A-4 253 304 discloses a thermal element that has a cylindrical chamber filled with a heat-responsive expandable wax. When the wax is heated, it expands, acting through a resilient seal member, to extend a pin or plunger. GB-A-2 095 338 describes a pair of oppositely disposed wax-filled cylinder/piston actuators which function as a motor. The pair of cylinder/piston assemblies are mounted oppositely on a rotor. As the piston of one of the assemblies extends, it causes the rotor to rotate reversing the position of the actuator/piston assemblies. By positioning the motor such that one side of the rotor is a hot location and the other a cold location, the cylinder/piston assemblies are caused to extend and contract cyclically, rotating the rotor.

The present invention contemplates a new and improved actuator which overcomes the above-referenced problems and others.

### Disclosure of Invention

An apparatus includes a fluid pressure vessel. A thermally conductive structure is disposed within an interior of the fluid pressure vessel. A phase change compound which expands as it changes from a solid phase to another, non-gaseous phase is disposed in the fluid pressure vessel. A heating means selectively adds heat to the phase change compound to cause the phase change compound to change phase and expand, and a pressure to mechanical movement converting means which is in contact with the phase change compound and on which the phase change compound directly exerts pressure according to the expansion of the phase change compound. The apparatus is further characterized by a thermally conductive structure which is disposed within an interior of the fluid pressure vessel. The thermally conductive structure defines thin paths which have a minimal dimension defined between surfaces of the thermally conductive structure. The phase change compound fills the pressure vessel an the thin paths.

In accordance with another aspect of the present invention, a method is provided of selectively extending and retracting a combination of an element and a pressure vessel described above. The pressure vessel has thin paths of minimal dimension containing a medium that undergoes a phase change between a first or contracted state and a second or expanded state Heat energy is added to the medium such that the medium changes from the first state to the second state, expanding and causing the element and pressure vessel combination to extend. Heat energy is removed from the medium such that the medium changes phase from the second phase to the first phase contracting and causing the element and pressure vessel combination to retract.

One advantage of the present invention resides in its high power density.

Another advantage of the present invention is its flexibility and simplicity of operation.

Still further advantages of the present invention reside in its silent operation, its relative freedom from stallout, the elimination of RF interference by the use of DC control currents, reduced power consumption to maintain an extended state, adaptive peak force level that automatically adapts to the application, and reliability of service even over a large number of repetitions.

Still further advantages of the present invention will become apparent to those of ordinary skill in the art upon reading and understanding the following detailed description.

### Brief Description of the Drawings

The invention may take part in various components and arrangements of components, and in various steps and arrangements of steps. The drawings are only for purposes of illustrating the preferred embodiment and are not to be construed as limiting the invention.
FIGURE 1 is a perspective view in partial section of an actuator including a fluid pressure generating vessel and fluid pressure to mechanical motion converter in accordance with the present invention;
FIGURE 2 is a longitudinal sectional view of the system of FIGURE 1;
FIGURE 3 is an enlarged transverse sectional view of a portion of the pressure vessel portion of FIGURE 1;
FIGURE 4 is a diagramatic illustration of an actuator in accordance with the present invention;
FIGURE 5 is a sectional view of a motor employing a plurality of the actuators of FIGURE 1;
FIGURE 6 is a side sectional view of the motor of FIGURE 5;
FIGURE 7 is an enlarged transverse sectional view illustrating actuator mounting;
FIGURE 8 illustrates an alternate embodiment of a motor utilizing a vapor phase heat pump;
FIGURE 9 is an exploded view of another alternate embodiment of the present invention using thermoelectric heating and cooling means;
FIGURE 10 illustrates a valve assembly incorporating an actuator analogous to that of FIGURE 1 utilizing Peltier heating and cooling;
FIGURE 11 is a sectional view through the pressure vessel of the actuator of FIGURE 10;
FIGURE 12 illustrates a multi-position spool valve controlled by the actuator of FIGURE 1 utilizing Peltier heating and cooling;
FIGURE 13 illustrates a pair of actuators of FIGURE 1 mounted to provide differential movement utilizing Peltier heating and cooling;
FIGURE 14 illustrates a plurality of the actuator pairs of FIGURE 13 assembled into a robotic hand;
FIGURE 15 illustrates an alternate pressure vessel core construction technique; and,
FIGURE 16 illustrates a pressure vessel core assembled with the technique of FIGURE 15.

### Best Modes for Carrying Out the Invention

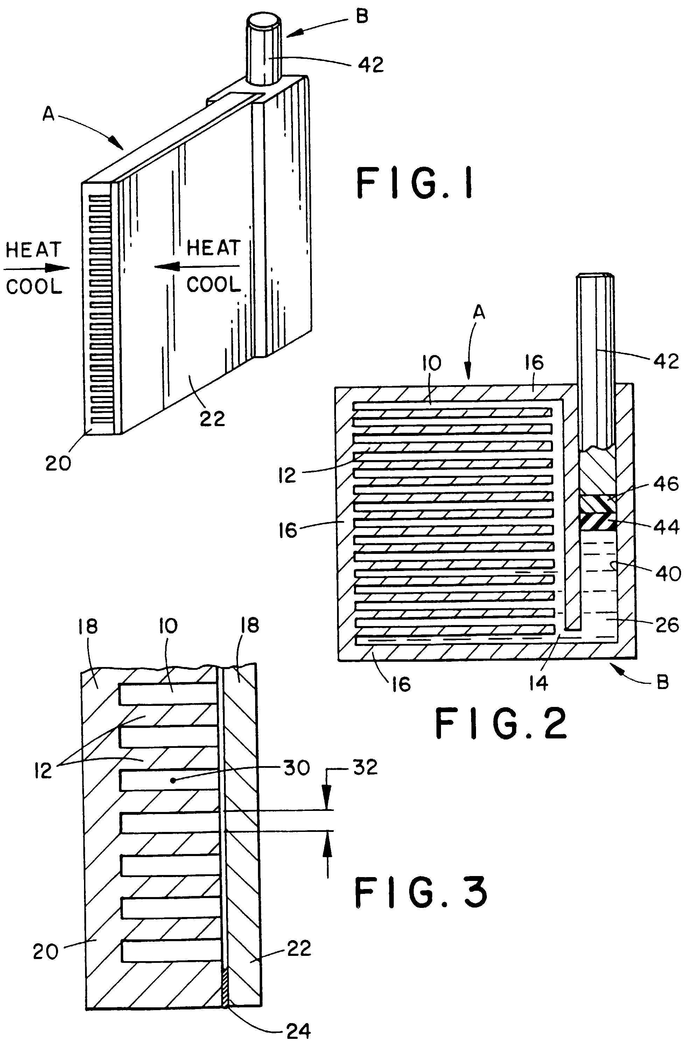

With reference to FIGURES 1, 2, and 3, a pressure vessel means A selectively generates a high pressure fluid which is converted into mechanical movement by a fluid pressure-mechanical motion converting means **B**. The pressure vessel means includes a multiplicity of thin paths **10** defined by a multiplicity of heat carrying and structural strength providing members or fins **12**. The thin paths merge at a manifold area **14** which is interconnected with the fluid pressure to mechanical movement generating means **B**. The pressure vessel is further defined by relatively strong end walls **16** and strong, readily heat conductive faces **18**. In the preferred embodiment, the thin paths **10** are cut in a single block **20** leaving three end walls **16**, one face **18**, and fins **12** all integrally connected. The second of faces **18** is defined by a plate **22** that is brazed by silver braze **24** to the end walls and the fins. The brazing not only provides effective heat transfers, but provides with the fins and opposite face an I-beam like structure for pressure stability.

More specifically, the pressure vessel is designed to optimize heat transfer into and out of a phase change material **26**, such as a wax or polymer, that fills the thin paths and manifold area of the pressure vessel. To this end, the pressure vessel is constructed of a high thermal conductivity metal, such as beryllium copper that is alloyed to have a conductivity of at least 1.1 cal.gm./hr.cm.² °C. In each path, there is a point **30** which is most remote from a thermally conductive fin or metal portion. It is advantageous to make point **30** as close as possible to one of the fins or conductive surfaces. To this end, a minimum dimension **32** of the thin paths is less than 0.025 cm., at preferably less than 0.0125 cm. Because most phase change materials tend to have relatively poor thermal conductivity properties relative to the thermal conductivity properties of the fins and housing, it is desirable for the minimum dimension to be only the thickness of a few molecules of the phase change material. Alternately, additional heat conductive structures are provided for carrying heat into the thin paths more quickly, e.g., thin wires or rods, porous, highly thermally conductive foam, a sintered thermally conductive material, suspended thermally conductive particles.

The end walls **16** and faces **18** are at least as thick as the width of the thin paths and preferably at least twice as thick and of heat treated beryllium copper which has a tensile strength of 6,650 kg./cm.². Preferably, the overall vessel has the capacity to hold an internal pressure of 2000 kg./cm.². However, for some applications, only lower internal pressures are generated.

The use of fins or other heat conductive structures is provided to define a long, thin path or plurality of interconnected path segments. In an embodiment in which the pressure vessel is about 40 cm., about 40 cm. long path segments each having a width of 0.025 cm. are provided. This provides a path width to length ratio of about 11,000:1. Preferably, the path length to minimum width ratio is at least 10,000:1.

The fluid pressure to mechanical movement converting means B includes a bore **40** in which a piston **42** is slidably received. Preferably, the piston and piston bore are of high strength materials, such as metal. To prevent fluid from flowing between the piston and piston bore under the high pressures generated, a low durometer seal member, such as a soft rubber disk **44** is slidably mounted in the bore **40** between the piston **42** and the fluid **26**. Under the very high pressures generated, there is a tendency for the low durometer seal to flow partially in between the piston and the bore. Accordingly, a higher durometer seal member, such as a nylon or teflon disk **46**, is interposed between the low durometer member and the piston. The higher durometer seal deforms sufficiently under pressure that it is pressed into sufficient conformity with the bore that the low durometer seal cannot move flow therebetween. Optionally, additional intermediate durometer members may be interposed, as necessary, to assure that the fluid **26** is restrained by the lowest durometer seal and that the shape integrity of each seal is maintained.

Of course, other pressure to mechanical movement devices are also contemplated. In one alternate embodiment, a snap dome is utilized instead of the piston. A snap dome is advantageous in that a fluid tight seal can be made between the edges of the dome and the vessel. In another embodiment, bellows type expansible chambers are utilized. As another alternative, the low durometer seal may interface with the phase change compound **26** on one side and a second fluid to be pressurized or compressed at the other. In this manner, pumping or pressurizing of a fluid is achieved without intervening mechanical members.

Although the fluid pressure to mechanical movement means **B** is illustrated as being at one end of the pressure vessel **A**, other arrangements are contemplated. For example, a second pressure reservoir may be connected to an opposite side of the piston bore and fluidly interconnected with the manifold area. Additional pressure vessels can also be interconnected at various angles with the manifold area. As yet another alternative, the manifold area may be defined in the brazed-on end plate **22** in a generally central region thereof. Conversely, a second fluid pressure to mechanical motion converting means can be connected with the pressure vessel. If the fluid pressure to mechanical motion converting means each include a piston, the pistons extend with equal pressure, but not necessarily equal travel. Numerous other placements of the pressure to mechanical motion converting means **B** relative to the pressure vessel **A** are also contemplated as may be appropriate to the application.

The phase change compound can be any of a wide variety of compounds which change dimension as they undergo a phase change between liquid and solid phases. The compound preferably increases about 10%-15% in volume as it changes from its solid to its liquid state. It is to be appreciated that the invention functions analogously, but inversely, with a compound that expands as it solidifies. By using a phase change, the compound can be expanded and contracted, i.e. moved back and forth between its solid and liquid states, by using heating and cooling sources that are only a couple of degrees apart. A suitable compound is a wax that melts at 50° C. Other polymers and substances are also contemplated.

A temperature changing means **50**, preferably a Peltier effect thermoelectric heating/cooling chip, selectively adds and removes heat from the expandable medium in the chamber. When connected with a source of electricity of one polarity, the Peltier effect chip heats its surface **52** closest to the chamber to transmit heat energy into the wax. When connected with the opposity polarity, the Peltier chip draws heat from its face against the chamber and discharges the heat through cooling fins **54** on an opposite face. A temperature control means **56** controls the Peltier chip to hold the expandable medium substantially at its melting temperature.

When thermal energy is applied to room temperature wax, the wax retains its solid form but increases in temperature until it reaches its melting point. The additional energy necessary to change from the solid to liquid phase is supplied by the application of additional thermal energy. When thermal energy is removed, the liquid wax solidifies and contracts. In this manner, the wax expands and contracts about 12-15% as heat is added to or removed from the wax which is held at its melting point temperature.

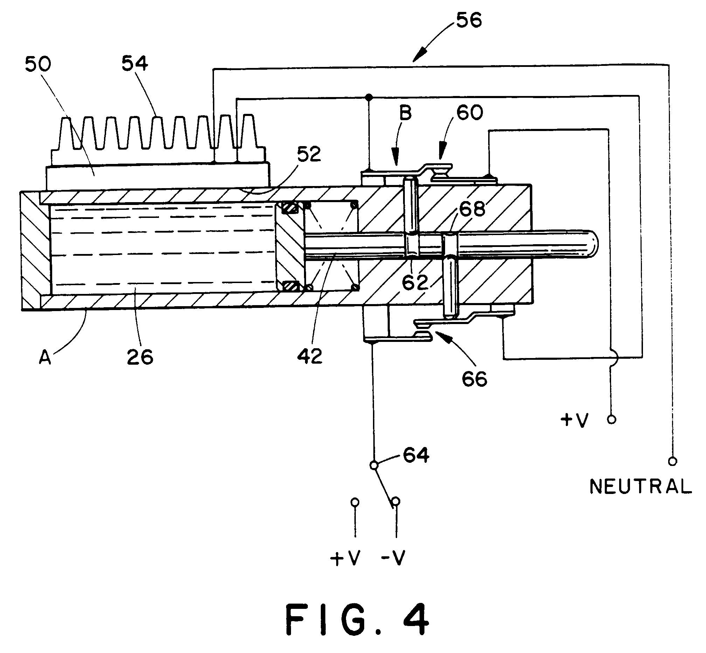

In the embodiment of FIGURE 4, the temperature control means **56** includes no direct thermal element in the preferred embodiment. Rather, it controls the temperature of the expandable medium by monitoring the volume. The expandable medium **26** is heated to and held at the melting point temperature. A small additional amount of heat is added to a small fraction of the expansion, e.g. to change a small percentage of the expandable medium to its liquid state. This marks the equilibrium retracted position. A first cam operated switch **60** that is received in a first recess **62** in the piston closes each time the piston starts to retract and opens whenever the piston starts to extend. When the switch closes, indicating that the small percentage of the liquid phase is starting to solidify, the first switch **60** closes conducting electrical current to the heating means to add additional heat energy into the expandable medium. When the retracted equilibrium position is again attained, the cam operated switch **60** opens and the application of heat is terminated.

To expand or retract the piston, voltage of an appropriate polarity is applied to a control lead **64**. To expand the piston, a first polarity voltage is applied to the lead and conveyed through a second cam operated switch **64** - **66** to the Peltier chip. Voltage of the first polarity causes the Peltier chip to pump heat into the expandable medium **26** effecting the phase change (expansion of the medium), and extension of the piston **42**. When the piston has been extended its full range, the second cam operated switch engages the first recess **62** and opens to terminate the supply of power to the Peltier chip. In the extended position, the second cam switch **66** engages the first recess **62** and opens. The second switch **66** closes each time the piston starts to retract, supplying more heating polarity voltage and opens when it returns to the full extended position.

To retract the piston, the opposite polarity potential is applied to the control lead **64**. The opposite polarity control voltage is conveyed through the second switch **66** to the Peltier chip **50** to operate it in a heat removal mode. The heat is removed until the cam of the second switch **66** falls into a second recess **68** in the piston, opening the second switch and stopping the appliation of second polarity potential. The first switch **60** interacts with the first recess **62** in the piston to maintain the piston in the retracted position.

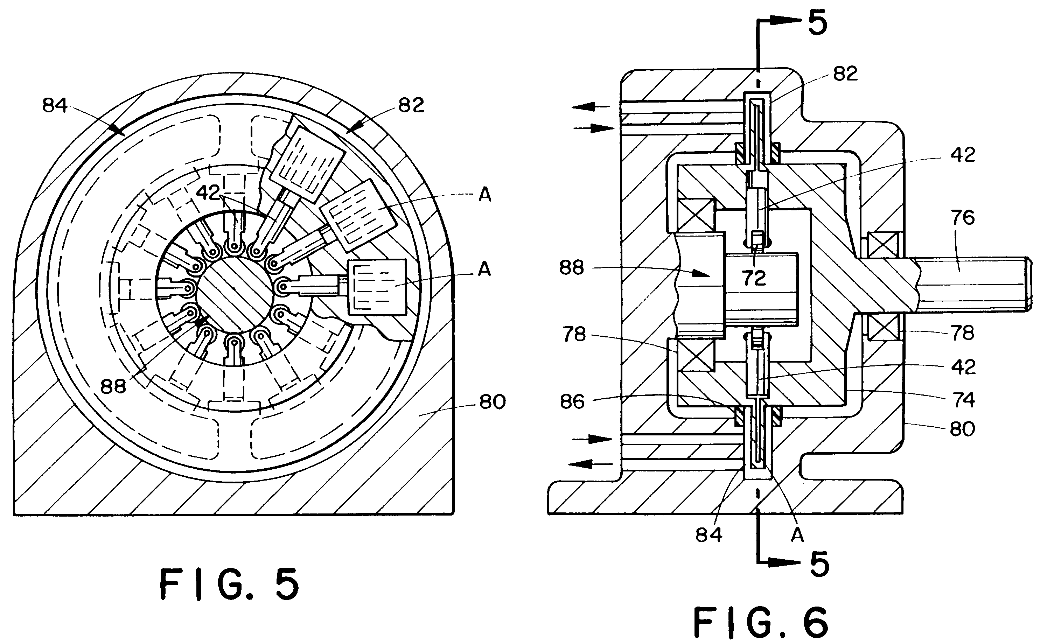

With reference to FIGURES 5, 6, and 7, a rotary motor is configured with a plurality of the actuators of FIGURE 1. Specifically, a plurality of actuators **70** with rollers or cam surfaces **72** on the ends of the pistons **42** are mounted to a movable member **74**, e.g. a ring. The fluid vessels extend radially outward from the ring **74**. The ring and actuators are mounted to an output shaft **76** which is mounted by bearings **78** in a stationary housing **80**.

The housing **80** defines an arcuate hot water bath or heating reservoir **82** and an arcuate cold water bath or cooling reservoir **84**. The reservoirs each extend generally along a half circle. Fluid seals **86** are provided between the hot and cold water baths to block intermixing of the hot and cold water while allowing the pressure vessels to move therethrough. The rollers on the ends of the pistons engage an eccentric member **88** which is mounted to the stationary body **80**. The eccentric member is mounted offset closest to one junction between the hot and cold water baths. When a pressure vessel first enters the hot water bath, the compound starts changing from its solid to its liquid state causing the piston to extend. Extension of the piston against the stationary eccentric member forces the actuator to move to a position where it is more remote from the eccentric member, i.e. rotate counterclockwise in the illustrated embodiment. As the fluid chamber becomes warmer, the piston extends still further until it reaches its point of maximum extension at the other interface between the hot and cold water baths. Once in the cold water bath, the composition starts to solidify, retracting the piston and allowing continued rotation about the eccentric member.

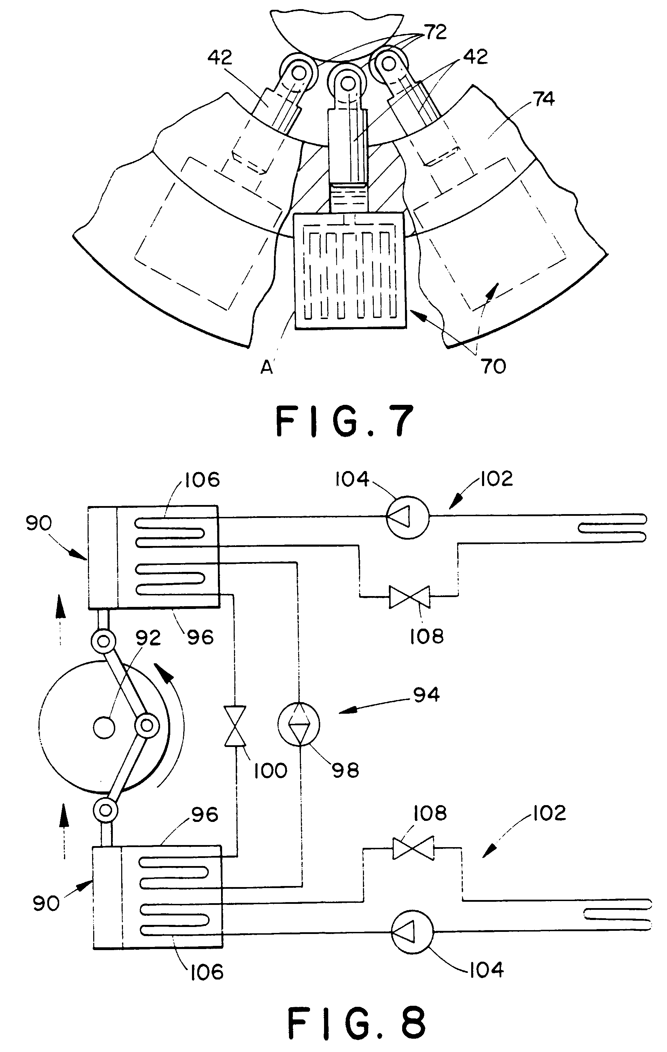

With reference to FIGURE 8, rotary motion can also be produced by a pair of oppositely mounted stationary actuators **90**. The piston **42** of each actuator is pivotally connected with a rotatably mounted crankshaft **92**. A heat transfer means **94**, preferably a vapor phase heat pump, transfers heat alternately between the two actuators causing them to cycle out of phase. Each actuator includes a coil **96** which is able to function as either an evaporator coil or a condenser coil. A reversible compressor or valve arrangement **98** for reversing flow pumps heat from one actuator to the other during about 180° rotation of the crankshaft. During the second 180° of rotation of the crankshaft, the compressor reverses and pumps the heat in the other direction. More specifically, freon gas is compressed by the compressor. The compressing elevates the temperature of the compressed gas or freon liquid, which hot freon liquid carries heat to one of the coils which is functioning as a condenser. The condenser coil heats the associated actuator. An expansion valve **100** allows the freon liquid to evaporate, it adsorbs heat, becoming cold. The cold freon gas flows through the other of coils **96** which is functioning as a condenser coil, removing heat from the other actuator. Once 180° of rotation is completed, the compressor reverses, reversing which of coils **96** functions as the condenser and which functions as the evaporator. In this manner, heat is moved in the other direction. Because a heat pump works most efficiently when moving heat between two reservoirs of substantially the same temperature, the heat pump system works near optimal efficiency.

A pair of additional heat transfer means **102**, preferably vapor phase heat pumps, are provided to replace heat losses at the two actuators. Specifically, each of the heat pumps **102** include a compressor **104** which selectively compresses freon removing heat from the ambient air or other heat source and discharging it into the associated actuator through a condenser coil **106**. An expansion valve **108** allows the freon liquid to expand to the gaseous state, absorbing heat from the ambient air. If the ambient air or other reservoir from which heat is removed is close to the working temperature of the actuators, the heat pump **102** again works at high efficiency.

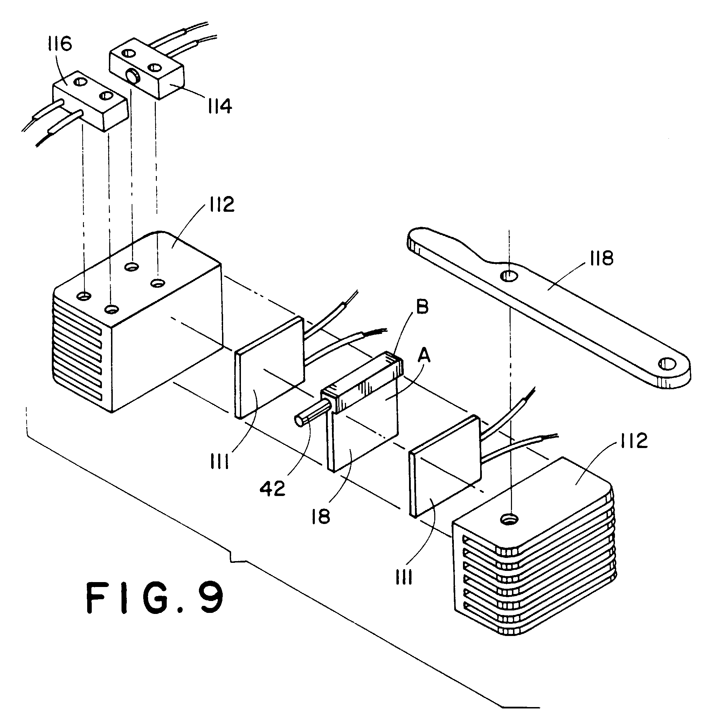

With reference to FIGURE 9, thermoelectric chips **111**, such as Peltier chips, are placed against faces **18** of the pressure vessel. Heat sinks, such as an array of fins **112** are mounted to opposite sides of the thermoelectric chips. The thermoelectric chips efficiently move heat from the ambient air into the pressure vessel **A** and from the pressure vessel back out to the ambient air. High and low travel limit switches **114, 116**, respectively, monitor for the piston to reach first and second degrees of extension. In the illustrated embodiment, the piston **42** engages a lever **118** which is cammed about a pivot point. The lever is interconnected at one end with associated equipment which is to be powered. The other end of the lever engages the limit switches **114, 116**.

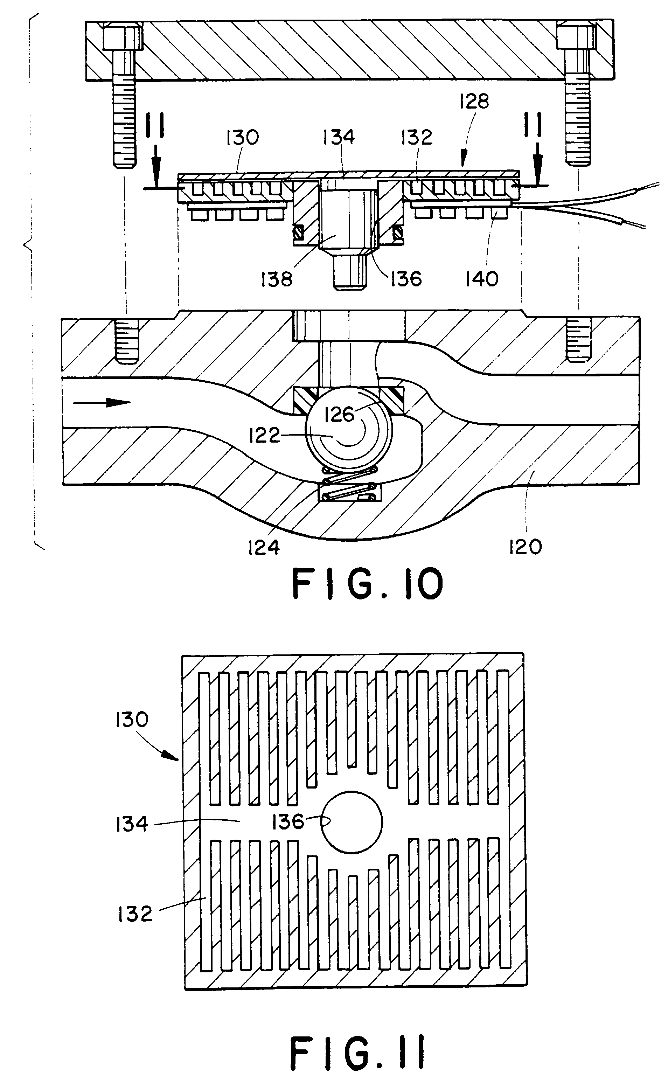

With reference to FIGURES 10 and 11, a valve body housing **120** has a valve member **122** biased by a spring **124** across a valve seat **126**. In the preferred embodiment, fluid under pressure from an inlet end assists the spring in biasing the valve member **122** against the valve seat **126**. An actuator **128** selectively moves the valve member away from the valve seat to permit fluid flow through the valve.

The actuator includes a pressure vessel **130** of substantially the construction illustrated in FIGURES 1-3. That is, a multiplicity of small passages or thin passages **132** filled with the phase change composition funnel to a manifold area **134**. The manifold area connects with a bore **136** in which a piston **138** is mounted. A heat transfer means **140**, such as a Peltier chip, selectively adds or removes heat from the pressure vessel **130**. Depending on the temperature of the fluid flowing through the valve, the fluid in the valve can be used either add or remove heat from the pressure vessel.

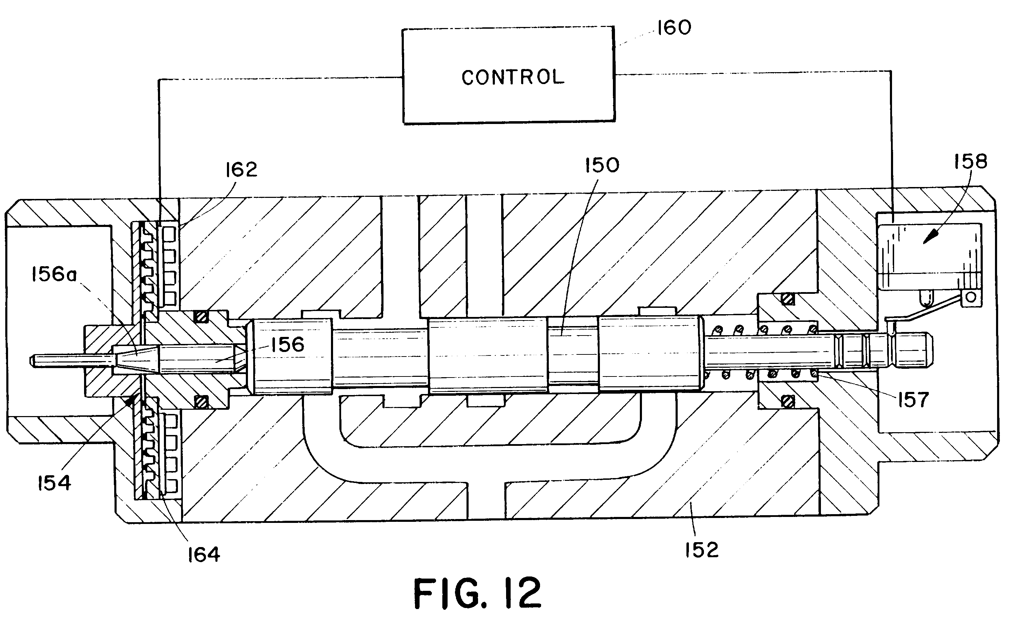

With reference to FIGURE 12, a three-way spool valve is provided. A spool member **150** is slidably mounted in a housing **152**. An actuator **154**, generally of the construction illustrated in FIGURES 10 and 11, but with longer piston travel has a piston **156** for moving the spool member against a spring **157**. In the preferred embodiment, the piston has a tapered surface **156a** in a confined chamber, against which the phase change compound presses. A monitoring means **158** monitors the position of the spool member hence the extension of the piston. A control means **160** controls a heat transfer means **162** to transfer heat into and out of a phase change compound holding chamber arrangement **164** in an annular ring around the confined piston chamber of the actuator **154**.

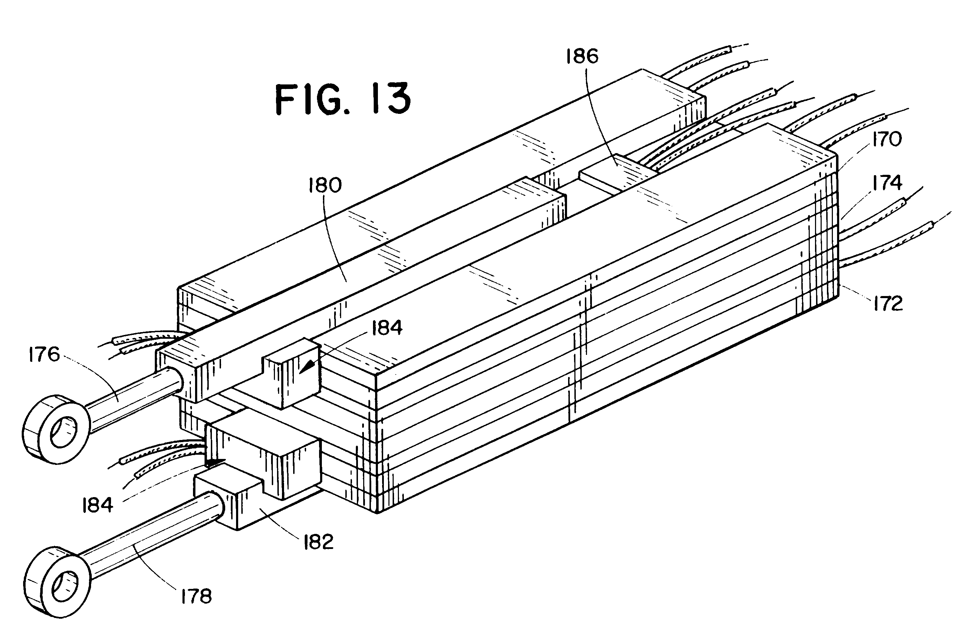

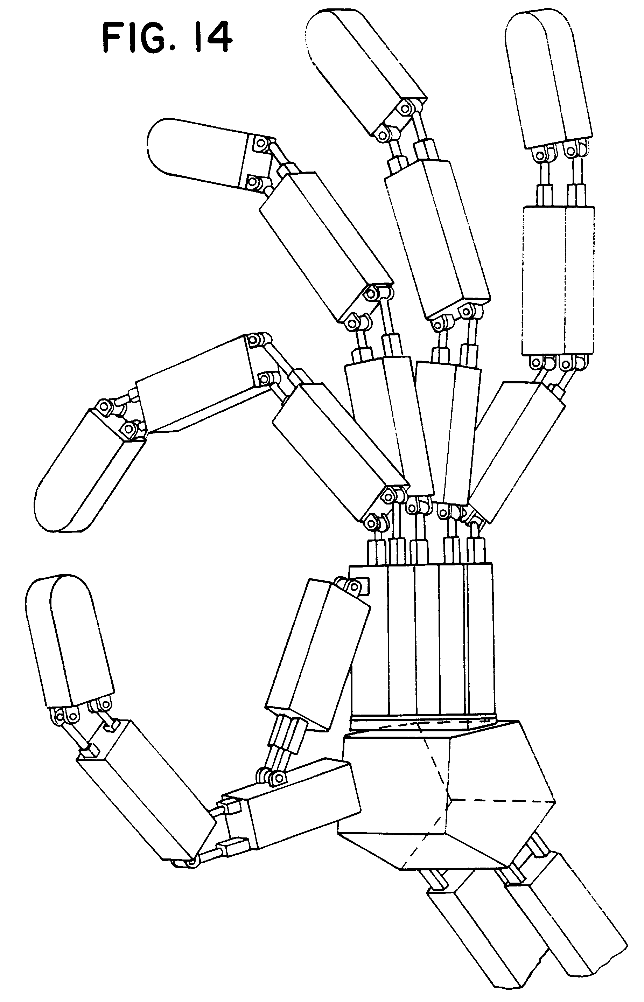

With reference to FIGURES 13 and 14, a pair of pressure vessels **170, 172** are mounted parallel to each other, with a common temperature transfer means **174** therebetween. Pistons **176, 178** of fluid pressure to mechanical motion converting means **180, 182** associated with each pressure vessel selectively extend and contract. Piston extension sensor means **184** provides an output signal indicative of the degree of relative piston extension. A pressure sensing means **186** senses the pressure within the pressure vessel, hence the pressure with which each piston is being extended. Based on this information, a computer control means selectively supplies electricity to the temperature controlling means **174** to adjust the relative extension and contraction of the pistons. As illustrated in FIGURE 13, a multiplicity of these dual piston, dual controlled actuators can be interconnected in various robotic configurations, such as a hand configuration.

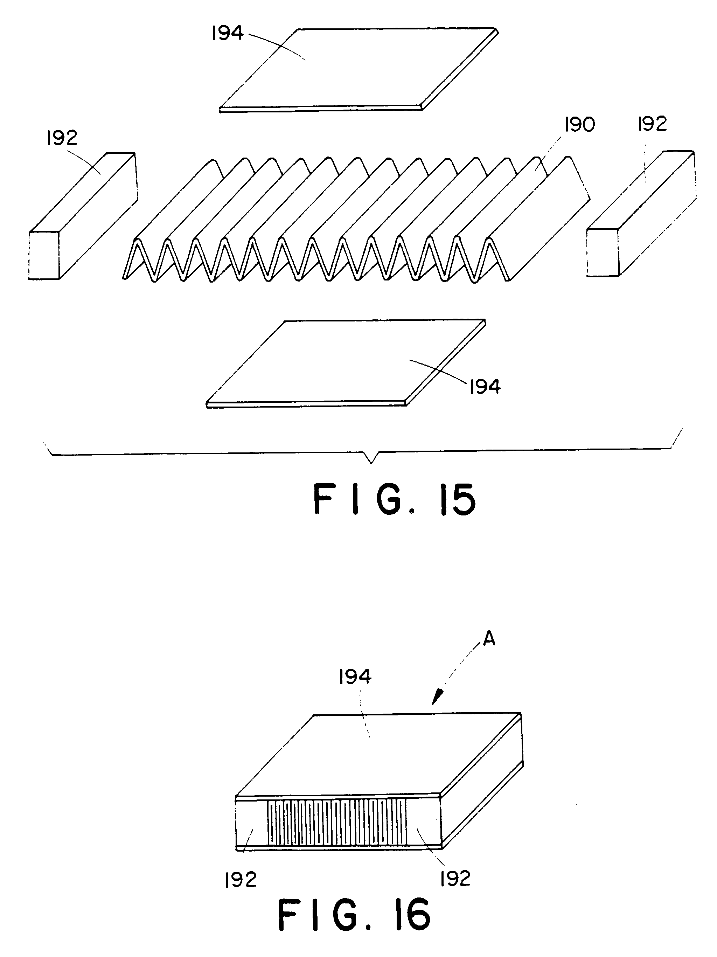

With reference to FIGURES 15 and 16, the pressure vessel **A** can be fabricated with different techniques. For example, a thin sheet of thermally conductive material **190** such as beryllium copper alloy, is accordion pleated. The accordion pleated sheet is coated with the phase change material and compressed between end blocks **192**. Alternately, the phase change material may be drawn in its liquid state into the paths after assembly. Top and bottom plates **194** are brazed at least to the end blocks and preferably to the pleated sheet for thermal conductivity and strength. The open ends of the compressed accordion pleated sheet are connected with a structure (not shown) that defines a manifold area leading to a piston bore as in FIGURES 1 and 2.

Numerous applications of these actuators readily identify themselves. In the automotive area, actuators can readily be used to control windshield wipers, power seats, power windows, power mirrors, power trunk openers, choke actuators, and other mechanisms which require proportional travel or variable rates of movement. The actuators are also suitable for power trunk latches, gas cap latches, rotating headlamp or headlamp covers, starter solenoids, axle shift devices, inter-axle shift devices, and the like which require merely on/off states.

The actuators also find uses in appliances including a number of directly actuated valves, gravity drain valves, dishwasher drain valves, three-way hydraulic-type valves, metering valves, pressure control valves, washing machine valves, video tape cassette ejection mechanisms, power door openers, ventilation duct damper actuators, ice cube dump mechanisms, zone valves, office equipment, and the like. The actuators can also be adapted for use with a variety of powered hand held devices, such as riveters, embossers, shears, hose crimpers, and the like. The technology is also useful for replacing explosive bolts, expandable rivets, one shot safety brake systems, deployable booms, field swaging operations, fly-by-wire actuators, large hydraulic valve actuators, proportional controllers, robotics, and the like.

## Claims

1. An apparatus including a fluid pressure vessel (A), a phase change compound (26) which expands as it changes from a solid phase to another, non-gaseous phase, is disposed in the fluid pressure vessel, a heat means (50, 82, 96, 111, 162, 174) for selectively adding heat to the phase change compound to cause the phase change compound to change phase and expand, a pressure to mechanical movement converting means (B), having an element (42, 130, 156), which is in contact with the phase change compound, and on which the phase change compound directly exerts pressure, according to the expansion of the phase change compound, CHARACTERIZED BY:
a thermally conductive structure (12, 190) within an interior of the fluid pressure vessel (A), which thermally conductive structure defines thin paths (10, 132), the thin paths having a minimal dimension defined between surfaces of the thermally conductive structure, the phase change compound filling the thin paths (10, 132),
the said thermally conductive structure defines a multiplicity of thin paths (10, 132),
the phase change compound filling the pressure vessel (A) and the thin paths (10, 132).

2. The apparatus as set forth in claim 1 further including a pressure to mechanical movement converting means (B, 42, 138, 156, 176, 178) for converting pressure from the phase change into mechanical movement, the pressure to mechanical movement converting means being operatively connected with the vessel interior.

3. The apparatus as set forth in claim 2 wherein the heat means selectively adds and removes heat from the phase change compound, and further including a temperature control means (56) for controlling the heat means to (1) hold the phase change compound substantially at a temperature at which it undergoes the phase change, (2) add heat energy to cause mechanical motion in a first sense, and (3) remove heat to cause mechanical motion in a second sense.

4. The apparatus as set forth in claim 2 wherein the pressure to mechanical movement converting means (B) includes an element (42, 138, 156, 176, 178) that extends as the phase change compound (26) changes to a liquid state and retracts as the phase change compound changes to the solid state.

5. The apparatus as set forth in claim 2 wherein the pressure to mechanical movement converting means includes a piston bore, a lower durometer member is slidably received in the bore in contact with the phase change compound, a higher durometer member is slidably received in the bore adjacent the lower durometer member, and a piston is slidably received in the bore abutting the higher durometer member.

6. The apparatus as set forth in claim 2 wherein the fluid pressure vessel has generally flat opposite wall surfaces; and wherein heat means includes at least one thermoelectric chip mounted against one of the vessel flat wall surfaces and a heat sink mounted in thermal communication with the thermoelectric chip, the thermoelectric chip being selectively operable for moving heat back and forth between the vessel and the heat sink.

7. The apparatus as set forth in claim 2 wherein:
the heat means includes a heating zone and a cooling zone; and
further including a movable member to which the vessel and the pressure to mechanical movement converting means are mounted for movement relative to the heating and cooling zones for selectively moving the vessel cyclically between the heating and cooling zones, the pressure to mechanical movement converting means providing motive force to move the movable member.

8. The apparatus as set forth in claim 2 further including:
a second pressure vessel (90, 170, 172) and a second fluid pressure to mechanical movement converting means (92, 176, 178) for selectively converting fluid pressure from a phase change compound in the second pressure vessel that changes phase to mechanical movement; and
wherein the heat means includes a heat transfer means (94, 174) for selectively moving heat back and forth between from the first pressure vessel and the second pressure vessel.

9. The apparatus as set forth in claim 2 wherein the pressure vessel (130, 164) is mounted to a valve (120, 122, 124, 126; 150, 152) with the pressure to mechanical movement converting means (138, 156) being operatively interconnected with a valve member (122, 150) for selectively changing states of the valve.

10. A method of selectively extending and retracting a combination of an element (42, 138, 156, 176, 178) and a pressure vessel (A, 130, 164, 170, 172) having thin- paths (10, 132) of minimal dimension defined by a thermally conductive structure as defined in claim 1 which thin paths contain a phase change compound (26) that undergoes a phase change between a first, contracted state and a second, expanded state at a phase change temperature, the method comprising;
maintaining the compound substantially at the phase change temperature;
adding heat energy to the compound such that the compound changes from the first state to the second state expanding and causing the element and pressure vessel combination to extend;
removing heat energy from the compound such that the compound changes phase from the second phase to the first phase contracting and causing the element and pressure vessel combination to retract.

## Patentansprüche

1. Vorrichtung mit einem Fluiddruckgefäß (A), einer in dem Fluiddruckgefäß angeordneten Phasenumwandlungsmasse (26), die sich ausdehnt, wenn sie sich aus einer festen Phase in eine andere, nicht gasförmige, Phase umwandelt,
einem Wärmemittel (50, 82, 96, 111, 162, 174) zum wahlweisen Hinzufügen von Wärme zur Phasenumwandlungsmasse, um zu bewirken, daß die Phasenumwandlungsmasse die Phase ändert und sich ausdehnt,
einem Druck in mechanische Bewegung umwandelnden Mittel B) mit einem Element (42, 130, 156), das sich in Kontakt mit der Phasenumwandlungsmasse befindet, und auf welches die Phasenumwandlungsmasse entsprechend ihrer Ausdehnung direkt Druck ausübt,
**gekennzeichnet durch** eine thermisch leitfähige Struktur (12, 190) im Inneren des Fluiddruckgefäßes (A), wobei die thermisch leitfähige Struktur feine Gänge (10, 132) bildet, die eine zwischen den Oberflächen der thermisch leit- fähigen Struktur definierte Mindestabmessung aufweisen, und die Phasenumwandlungsmasse die feinen Gänge (10, 132) ausfüllt,
wobei die thermisch leitfähige Struktur eine vielzahl von feinen Gängen (10, 132) bildet und die Phasenumwandlungsmasse das Druckgefäß (A) und die feinen Gänge (10, 132) ausfüllt.

2. Vorrichtung nach Anspruch 1, die weiter ein Druck in mechanische Bewegung umwandelndes Mittel (B, 42, 138, 156, 176, 178) enthält, um Druck durch Phasenänderung in mechanische Bewegung umzuwandeln, wobei das Druck in mechanische Bewegung umwandelnde Mittel mit dem Gefäßinneren funktionsfähig verbunden ist.

3. Vorrichtung nach Anspruch 2, wobei das Wärmemittel wahlweise Wärme der Phasenumwandlungsmasse hinzufügt und von ihr entnimmt und weiter eine Temperaturregeleinrichtung (56) zur Steuerung des Wärmemittels enthält, um
(1) die Phasenumwandlungsmasse im wesentlichen auf einer Temperatur zu halten, bei der sie die Phasenänderung durchmacht,
(2) Wärmeenergie hinzuzufügen, um eine mechanische Bewegung in eine erste Richtung zu bewirken, und
(3) Wärme zu entnehmen, um eine mechanische Bewegung in eine zweite Richtung zu bewirken.

4. Vorrichtung nach Anspruch 2, wobei das Druck in mechanische Bewegung umwandelnde Mittel (B) ein Element (42, 138, 156, 176, 178) enthält, das ausfährt, wenn sich die Phasenumwandlungsmasse (26) in einen flüssigen Zustand umwandelt und einfährt, wenn sich die Phasenumwandlungsmasse in den festen Zustand umwandelt.

5. Vorrichtung nach Anspruch 2, in der das Druck in mechanische Bewegung umwandelnde Mittel eine Kolbenbohrung enthält, wobei ein Element niederer Härte, das sich mit der Phasenumwandlungsmasse in Kontakt befindet, in der Bohrung verschiebbar aufgenommen ist und ein Element höherer Härte, das dem Element niederer Härte benachbart liegt, in der Bohrung verschiebbar aufgenommen ist und ein Kolben in der Bohrung verschiebbar aufgenommen ist, der an das Element höherer Härte anstößt.

6. Vorrichtung nach Anspruch 2, in der das Fluiddruckgefäß im allgemeinen flache, gegenüberliegende Wandflächen aufweist;
und wobei das Wärmemittel mindestens einen an einer der flachen Wandflächen des Gefäßes befestigten thermoelektrischen Chip und einen Kühlkörper enthält, der mit dem thermoelektrischen Chip in thermischer Verbindung angebracht ist, wobei der thermoelektrische Chip wahlweise funktioniert für eine Wärmebewegung hin und her zwischen dem Gefäß und dem Kühlkörper.

7. Vorrichtung nach Anspruch 2, wobei:
das Wärmemittel eine Wärmezone und eine Kühlzone einschließt; und
weiter ein bewegbares Element enthält, an dem das Gefäß und das Mittel zur Umwandlung von Druck in mechanische Bewegung für eine Bewegung relativ zu der Wärme zone und der Kühlzone befestigt sind, um das Gefäß wahlweise zwischen der Wärmezone und der Kühlzone zyklisch zu bewegen, wobei das Mittel zur Umwandlung von Druck in mechanische Bewegung eine Antriebskraft erzeugt, um das bewegbare Element zu bewegen.

8. Vorrichtung nach Anspruch 2, weiterhin enthaltend:
ein zweites Druckgefäß (90, 170, 172) und ein zweites Mittel zur Umwandlung von Fluiddruck in mechanische Bewegung (92, 176, 178), um wahlweise Fluiddruck von einer Phasenumwandlungsmasse im zweiten Druckgefäß, die die Phase ändert, in mechanische Bewegung umzuwandeln; und
wobei das Wärmemittel ein Wärmeübercragungsmittel (94, 174) enthält für eine wahlweise Wärmeübertragung hin und her zwischen dem ersten Druckgefäß und dem zweiten Druckgefäßt.

9. Vorrichtung nach Anspruch 2, in der das Druckgefäß (130, 164) an einem Ventil (120, 122, 124, 126; 150, 152) befestigt ist, wobei das Mittel zur Umwandlung von Druck in mechanische Bewegung (138, 156) mit einem Ventilelement (122, 150) funktionsfähig verbunden ist, um wahlweise die Zustände des Ventils zu ändern.

10. Verfahren des wahlweisen Ausfahrens und Einfahrens einer Kombination eines Elements (42, 138, 156, 176, 178) und eines Druckgefäßes (A, 130, 164, 170, 172), das feine Gänge (10, 132) mit einer minimalen Abmessung aufweist, die durch eine thermisch leitfähige Struktur gebildet sind wie es im Anspruch 1 definiert ist, wobei die feinen Gänge eine Phasenumwandlungsmasse (26) enthalten, die eine Phasenänderung zwischen einem ersten, zusammengezogenen Zustand und einem zweiten, ausgedehnten Zustand bei einer Phasenänderungstemperatur durchmacht, wobei das Verfahren umfaßt:
das Halten der Masse im wesentlichen auf der Phasenänderungstemperatur;
das Hinzufügen von Wärmeenergie zu der Masse derart, daß sich die Masse von dem ersten Zustand in den zweiten Zustand umwandelt, sich ausdehnt und bewirkt, daß die Element- und Druckgefäßkombination ausfährt;
das Entnehmen von Wärmeenergie von der Masse derart, daß die Masse die Phase ändert von der zweiten Phase in die erste Phase, sich zusammenzieht und bewirkt, daß die Element- und Druckgefäßkombination einfährt.

## Revendications

1. Dispositif comprenant un récipient (A) de pression de fluide, un composé à changement de phase (26) qui se dilate lorsqu'il passe d'une phase solide à une autre phase non-gazeuse, est disposé dans le récipient de pression de fluide, des moyens de chauffage (50, 82, 96, 111, 162, 174) destinés à ajouter de manière sélective de la chaleur au composé à changement de phase pour entraîner le changement de phase et la dilatation du composé à changement de phase, des moyens (B) de conversion d'une pression en mouvement mécanique, ayant un élément (42, 130, 156), qui sont en contact avec le composé à changement de phase, et sur lesquels le composé à changement de phase exerce directement une pression, selon la dilatation du composé à changement de phase, une structure thermiquement conductrice (12, 190) à l'intérieur du récipient (A) à pression de fluide, laquelle structure thermiquement conductrice définit des passages minces (10, 132), les passages minces ayant une dimension minimale définie entre les surfaces de la structure thermiquement conductrice, le composé à changement de phase remplissant les passages minces (10, 132), ladite structure thermiquement conductrice définit une multiplicité de passages minces (10, 132), le composé à changement de phase remplissant le récipient (A) et les passages minces (10, 132).

2. Dispositif selon la revendication 1, comprenant en outre des moyens de conversion (B, 42, 138, 156, 176, 178) de la pression en un mouvement mécanique destinés à convertir la pression du changement de phase en mouvement mécanique, les moyens de conversion de la pression en un mouvement mécanique étant connectés de manière fonctionnelle à l'intérieur du récipient.

3. Dispositif selon la revendication 2, dans lequel les moyens de chauffage ajoutent ou enlèvent de manière sélective de la chaleur d'un composé à changement de phase, et comprenant en outre des moyens de contrôle de la température (56) pour contrôler les moyens de chauffage pour (1) maintenir le composé à changement de phase sensiblement à une température à laquelle il subit le changement de phase, (2) ajoute de l'énergie thermique afin d'entraîner un mouvement mécanique dans un premier sens, et (3) de supprimer la chaleur pour entraîner un mouvement mécanique dans un second sens.

4. Dispositif selon la revendication 2, dans lequel les moyens de conversion (B) de la pression en un mouvement mécanique comprennent un élément (42, 138, 156, 176, 178) qui s'étend lorsque le composé à changement de phase (26) change pour passer à un état liquide et se rétracte lorsque le composé à changement de phase change pour passer à l'état solide.

5. Dispositif selon la revendication 2, dans lequel les moyens de conversion de la pression en un mouvement mécanique comprennent un alésage de piston, un élément de duromètre inférieur est reçu de manière coulissante dans l'alésage en contact avec le composé à changement de phase, un élément de duromètre supérieur est reçu de manière coulissante dans l'alésage adjacent à l'élément de duromètre inférieur, et un piston est reçu de manière coulissante dans l'alésage venant en butée contre l'élément de duromètre supérieur.

6. Dispositif selon la revendication 2, dans lequel le récipient de pression de fluide a généralement des surfaces de parois opposées plates, et dans lequel les moyens de chauffage comprennent au moins une puce thermoélectrique montée contre l'une des surfaces de parois plates du récipient et un dissipateur de chaleur monté en communication thermique avec la puce thermoélectrique, la puce thermoélectrique pouvant fonctionner de manière sélective pour déplacer la chaleur d'avant en arrière entre le récipient et le dissipateur de chaleur.

7. Dispositif selon la revendication 2, dans lequel :
les moyens de chauffage comprennent une zone de chauffage et une zone de refroidissement ; et
comprenant en outre un élément mobile auquel le récipient et les moyens de conversion de la pression en un mouvement mécanique sont montés pour effectuer un mouvement par rapport aux zones de chauffage et de refroidissement pour déplacer de manière sélective le récipient cycliquement entre les zones de chauffage et de refroidissement, les moyens de conversion de la pression en un mouvement mécanique fournissant la force motrice pour déplacer l'élément mobile.

8. Dispositif selon la revendication 2, comprenant en outre :
un second récipient de pression (90, 170, 172) et une seconde pression de fluide (92, 176, 178) pour convertir de manière sélective une pression de fluide provenant d'un composé à changement de phase dans le second récipient de pression qui change de phase pour atteindre un mouvement mécanique ; et
dans lequel les moyens de chauffage comprennent des moyens de transfert de chaleur (94, 174) pour déplacer de manière sélective la chaleur d'avant en arrière entre le premier récipient de pression et le second récipient de pression.

9. Dispositif selon la revendication 2, dans lequel le récipient de pression (130, 164) est monté sur une vanne (120, 122, 124, 126 ; 150, 152) avec les moyens de conversion (138, 156) de la pression en un mouvement mécanique qui sont interconnectés de manière fonctionnelle avec un élément de vanne (122, 150) pour changer sélectivement les états de la vanne.

10. Procédé destiné à étendre et rétracter une combinaison d'un élément (42, 138, 156, 176, 178) et un récipient de pression (A, 130, 164, 170, 172) ayant des passages minces (10, 132) de dimension minimale définis par une structure thermiquement conductrice selon la revendication 1, lesquels passages minces contiennent un composé à changement de phase (26) qui subit un changement de phase entre un premier état contracté et un second état dilaté à une température de changement de phase, le procédé comprenant :
le maintien du composant sensiblement à la température de changement de phase ;
l'ajout d'énergie thermique au composé de telle sorte que le composé passe du premier état au second état en se dilatant et en entraînant l'extension de la combinaison élément et récipient de pression;
la suppression de l'énergie thermique du composé de telle sorte que le composé change de phase entre la seconde phase et la première phase en se contractant et en entraînant la rétractation de la combinaison élément et récipient de pression.
